# EUROPÄISCHE PATENTSCHRIFT

(11) **EP 1 055 537 B1**
(45) Veröffentlichungstag und Bekanntmachung des Hinweises auf die Patenterteilung: **26.02.2003**
(21) Anmeldenummer: 00107960.7
(22) Anmeldetag: 17.04.2000
(51) Int. Cl.: B60J 3/02, B60Q 3/02

(54) **Sonnenblende mit integriertem Bedienelement**
Sun visor with integrated control element
Pare-soleil avec élément de commande intégré

(30) Priorität: 22.05.1999 DE 19923707
(43) Veröffentlichungstag der Anmeldung: 29.11.2000
(73) Patentinhaber: Volkswagen Aktiengesellschaft, 38436 Wolfsburg (DE)
(72) Erfinder: Hiller, Matthias, 38542 Leiferde (DE); Sans, Michael, 38104 Braunschweig (DE)

(56) Entgegenhaltungen:
- EP-A- 0 689 964
- DE-A- 19 739 352
- US-A- 4 902 062

## Beschreibung

Die Erfindung betrifft eine Sonnenblende mit integrierten Bedienelementen.

Aufgrund des stark begrenzten Bauraums in Kraftfahrzeugen gibt es vielfältige Anstrengungen, ungenutzte Bauräume von Elementen zu nutzen. Dies ermöglicht nicht nur einen kompakten Aufbau, sondern vereinfacht auch die Montage, da diese komplexen Elemente einfacher vormontierbar sind und damit die Gesamtzahl der zu montierenden Elemente im Kraftfahrzeug reduziert wird.

Aus der DE 197 39 352 A1 ist eine Sonnenblende eines Kraftfahrzeuges bekannt, in die ein Display zur Darstellung von Fernseh- oder Videobildem integriert ist. Die Sonnenblende ist dabei mittels Halterungen derart am Dach der Fahrgastzelle befestigt, daß diese von einer Nichtgebrauchsstellung parallel zum Dach in eine Gebrauchsstellung parallel zur Windschutzscheibe klappbar ist. Desweiteren ist die Sonnenblende in der Gebrauchsstellung schwenkbar gelagert. Das Display ist in der in der Gebrauchsstellung dem Kraftfahrzeuginsassen zugewandten Seite angeordnet, die nachfolgend als Vorderseite bezeichnet wird. Zusätzlich sind Bedienelemente neben dem Display in der Vorderseite integriert, mittels derer das Display beispielsweise einund ausgeschaltet wird und andere Einstellungen des Displays vomehmbar sind. Desweiteren ist die Elektronik zur Ansteuerung des Displays ebenfalls in die Sonnenblende integriert. In einer Halterung der Sonnenblende sind Kontakte angeordnet, über die der Elektronik und dem Display die Versorgungsspannung von außen zuführbar ist.

Aus der US-4,247,850 ist eine Sonnenblende mit integrierter Garagentor-Betätigungseinrichtung bekannt. Die Garagentor-Betätigungseinrichtung umfaßt ein Bedienelement, eine Sendeeinheit und eine mit der Sendeeinheit verbundene Antenne, über die nach außen codierte RF-Signale an eine korrespondierende Empfangseinheit am Garagentor gesendet werden. Die Sendeeinheit ist im Innern der Sonnenblende angeordnet und mit Codier-Schaltern ausgebildet, über die der ausgesendete Code veränderbar ist. Die Codier-Schalter sind unterhalb eines in die Vorderseite integrierten, lösbaren Schminkspiegels angeordnet. Im Rahmen des Schminkspiegels ist das Bedienelement und eine LED angeordnet, wobei das Bedienelement als Druckschalter ausgebildet ist. Um das Garagentor zu öffnen, muß nun der Kraftfahrzeuginsasse die Sonnenblende herunterklappen, so daß die Vorderseite für ihn zugänglich ist. Durch Betätigung des Bedienelementes wird einerseits der Stromkreis für die LED, die die Betätigung dem Insassen optisch signalisiert und andererseits der Stromkreis für die Sendeeinheit geschlossen, die dann ein RF-Signal erzeugt, das über die Antenne abgestrahlt wird. Nachteilig an der bekannten Garagentor-Betätigungseinrichtung ist, daß jeweils erst die Sonnenblende heruntergeklappt werden muß, um das Bedienelement betätigen zu können.

Aus der EP 0 689 964 A1 ist eine Fernsteuerungseinheit zur Installation in einem Fahrzeug bekannt, wobei das Fahrzeug eine Decke und eine an der Decke befindliche Sonnenblende aufweist und die Fernsteuerungseinheit an der Fahrzeugdecke in der Nähe der Sonnenblende angeordnet ist, wobei die Femsteuerungseinheit folgendes umfaßt: eine Schaltung, einen mit der Schaltung verbundenen Sender, eine mit dem Sender verbundene Antenne und mindestens ein an der Fahrzeugdecke befindliches Schaltmittel, das zur Betätigung der Schaltung und des Senders zum Senden eines Funksignals über die Antenne zur automatischen Vorrichtung mit der Schaltung verbunden ist. Um die Sonnenblende in der Nichtgebrauchsstellung nicht zu behindern, ist die Fernsteuerungseinheit in einer Aussparung derart angeordnet, daß die Fernsteuerungseinheit bündig abschließt. Damit der Fahrzeuginsasse die Schaltmittel, ohne die Sonnenblende zu bewegen, betätigen kann, sind diese derart versetzt angeordnet, daß diese durch die Sonnenblende in der Nichtgebrauchsstellung nicht verdeckt werden. Nachteilig an der bekannten Fernsteuerungseinheit ist, daß mechanische Vorhaltungen an der Fahrzeugdecke notwendig sind. Zum einen scheidet damit eine Nachrüstung in vorhandenen Kraftfahrzeugen aus, und zum anderen stört die Aussparung den ästhetischen Gesamteindruck. In Kraftfahrzeugen, wo keine Fernsteuerungseinheit gewünscht wird, müßte daher entweder ein Dummy eingesetzt werden oder aber ein anderer Formhimmel. Unterschiedliche Formhimmel für verschieden ausgestattete Fahrzeuge erhöhen jedoch die Kosten und erschweren darüber hinaus die Fertigung. Des weiteren ist die Halterung zu der Aussparung genau zu justieren, was wiederum die Fertigung erschwert.

Aus der US-4, 902, 062 ist eine elektrisch antreibbare Sonnenblende bekannt, die sowohl auf der Vorder als auch der Rückseite der Sonnenblende mit einem Bedienelement für den elektrischen Stellantrieb ausgebildet ist, so dass dieser in der eingefahrenen und in der ausgefahrenen Position betätigbar ist. Dabei sind die beiden Bedienelemente zueinander versetzt angeordnet.

Der Erfindung liegt daher das technische Problem zugrunde, eine Sonnenblende mit auf der Vorder- und der Rückseite angeordneten Bedienelementen gleicher Funktionalität zu verbessern.

Die Lösung des technischen Problems ergibt sich durch die Merkmale des Patentanspruchs 1. Weitere vorteilhafte Ausgestaltungen der Erfindung ergeben sich aus den Unteransprüchen.

Hierzu sind das erste und zweite Bedienelement einander genau gegenüberliegend angeordnet und arbeiten auf ein gemeinsames Schaltmittel. Dies ermöglicht einen kompakteren Aufbau des Schaltmittels bzw. eines das Schaltmittel enthaltenen Schaltungsmoduls, das in der Sonnenblende integriert ist. Des weiteren ermöglicht dies eine lokale Zuordnung für den Nutzer unabhängig davon, ob die Bedienelemente der Vorder- oder der Rückseite bedient werden. Der Begriff Integration umfasst dabei sowohl die direkte Integration als auch die Integration des Bedienelementes in den Rahmen eines in die Sonnenblende integrierten Spiegels.

In einer bevorzugten Ausführungsform sind die Bedienelemente als Druckschalter ausgebildet, die sich relativ einfach bündig in die Sonnenblende integrieren lassen. Es sind jedoch auch Drehregler oder Wippschalter denkbar.

Desweiteren können zusätzlich noch jeweils nur einseitig bedienbare Bedienelemente vorgesehen sein. Beispielsweise ist in der Vorderseite ein Bedienelement für die Beleuchtung eines in die Vorderseite integrierten Schminkspiegels vorgesehen, die nicht von der Rückseite bedienbar sein muß. In einer weiteren bevorzugten Ausführungsform ist in mindestens eine Seite der Sonnenblende ein lösbarer Deckel integriert, der das Schaltungsmodul abdeckt. Dies ermöglicht eine einfache Montage bzw. Demontage des Schaltungsmoduls. Ist der Deckel in die Vorderseite der Sonnenblende integriert, kann beispielsweise ein Schminkspiegel auf oder in dem Deckel angeordnet sein.

Die Spannungsversorgung für das Schaltungsmodul kann extern vom Bordnetz erfolgen, beispielsweise über elektrische Kontakte an den Haltungen der Sonnenblende oder aber über eine eigene, in der Sonnenblende angeordnete Spannungsversorgung.

Die Bedienelemente können sowohl für im Kraftfahrzeug angeordnete Komponenten als auch als Bestandteil einer Fernbedienungseinheit zum Öffnen von Garagentüren und ähnlichen verwendet werden.

Die Erfindung wird nachfolgend anhand eines bevorzugten Ausführungsbeispiels näher erläutert. Die Fig. zeigen:
- Fig. 1a: eine Vorderansicht einer Rückseite einer Sonnenblende,
- Fig. 1b: eine Vorderansicht einer Vorderseite der Sonnenblende,
- Fig. 2a: eine Detaildarstellung von Fig. 1a und

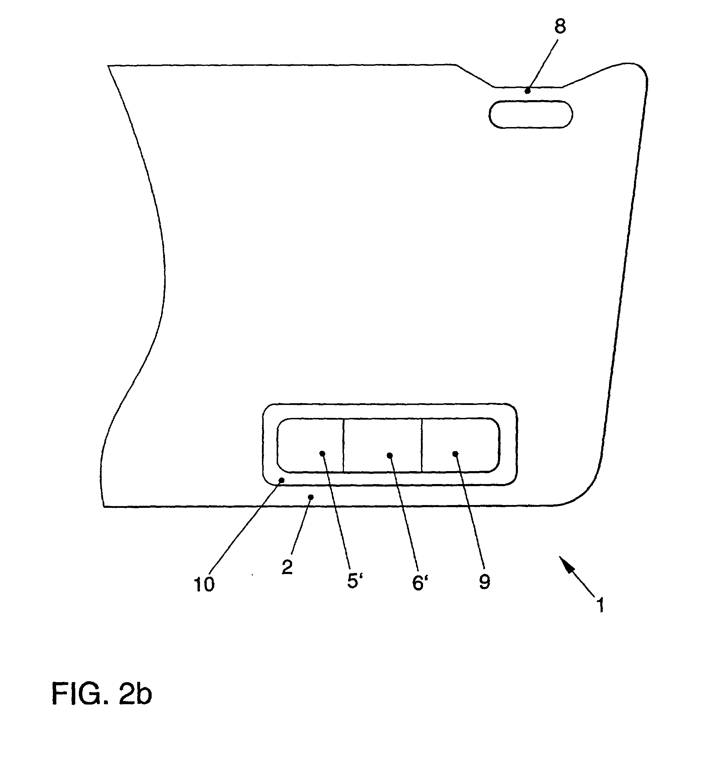

- Fig. 2b: eine Detaildarstellung der Fig. 1b.

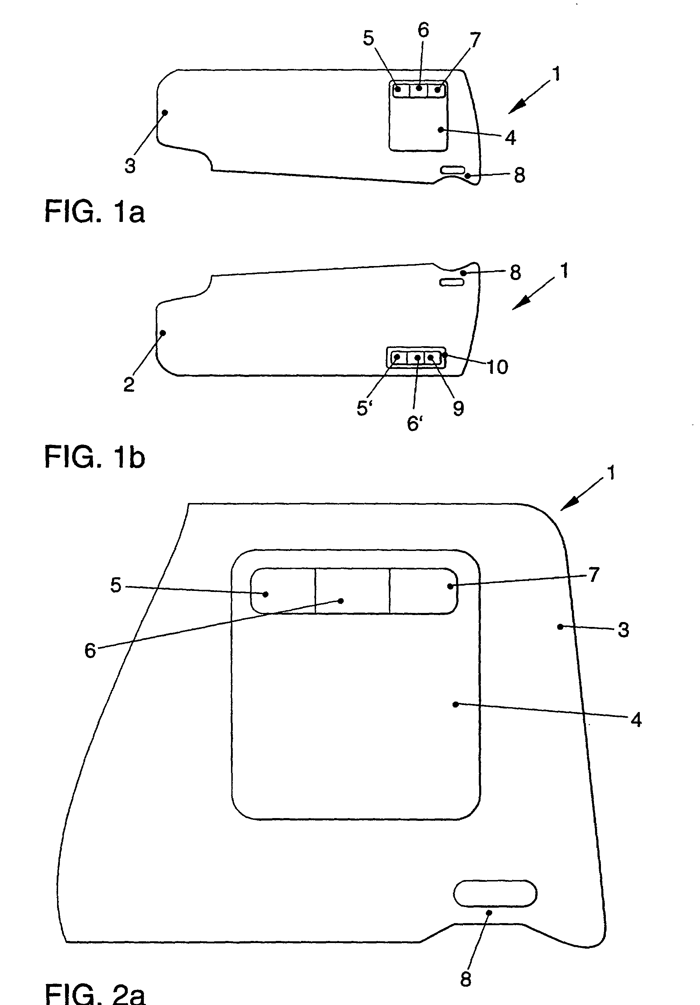

In der Fig. 1a ist die Sonnenblende 1 eines Beifahrers in einer Nichtgebrauchsstellung und in Fig. 1b in einer Gebrauchsstellung dargestellt. Die Sonnenblende 1 umfaßt zwei halbschalenförmige Elemente, die zusammen die hohlkörperförmige Sonnenblende 1 bilden. Das eine halbschalenförmige Element bildet dabei im wesentlichen die Vorderseite 2 der Sonnenblende 1, d.h. die Seite, die ein Fahrzeuginsasse in der Gebrauchsstellung sieht. Entsprechend bildet das andere halbschalenförmige Element im wesentlichen die Rückseite 3 der Sonnenblende 1, d.h. die Seite, die ein Fahrzeuginsasse in der Nichtgebrauchsstellung sieht. In die Rückseite 3 der Sonnenblende 1 ist ein Deckel 4 integriert, dessen Oberfläche im wesentlichen bündig zur Rückseite 3 der Sonnenblende 1 ist. Der Deckel 4 ist vorzugsweise mit Rastmitteln lösbar in der Sonnenblende 1 befestigt. In den Deckel 4 und somit in die Rückseite 3 der Sonnenblende 1 sind drei als Druckschalter ausgebildete Bedienelemente 5, 6 und 7 integriert. Die Bedienelemente 5 - 7 sind einem im Innern der Sonnenblende 1 angeordneten Schaltungsmodul zugeordnet, das durch den Deckel 4 abgedeckt wird.

Desweiteren ist die Sonnenblende 1 mit einer Halterung 8 ausgebildet, um die die Sonnenblende 1 geschwenkt werden kann. In die Vorderseite 2 der Sonnenblende 1 sind ebenfalls drei Bedienelemente 5', 6' und 9 integriert, die von einem Abdeckrahmen 10 umgeben sind. Die Oberfläche der drei Bedienelemente 5', 6' und 9 sowie des Abdeckrahmens 10 schließen ebenfalls bündig mit der Oberfläche der Sonnenblende 1 ab. Die Bedienelemente 5 - 7 bzw. 5', 6' und 9 sind genau gegenüberliegend auf der Rückseite 3 bzw. Vorderseite 2 zueinander angeordnet, wobei die Bedienelemente 5 und 5' bzw. 6 und 6' jeweils die gleiche Funktionalität aufweisen. Bei einer festen Zuordnung der Funktionalität können die Bedienelemente 5 - 7, 5', 6' und 9 mit piktogrammförmigen Symbolen unterlegt sein, um für den Nutzer eine einfache Zuordnung zu gewährleisten. Durch die gegenüberliegende Anordnung der korrespondierenden Bedienelemente 5 und 5' bzw. 6 und 6' können diese auf ein einziges gemeinsames Schaltmittel im Schaltungsmodul arbeiten. Den Bedienelementen 5 und 5' bzw. 6 und 6' sind dabei Funktionen zugeordnet, die ein Nutzer unabhängig von der Stellung der Sonnenblende 1 bedienen möchte, wie beispielsweise eine Garagentor-Betätigungseinrichtung, ein Autotelefon, eine Klimaanlage oder ähnliches. Dem Bedienelement 7 hingegen ist eine Funktion zugeordnet, die nur bei hochgeklappter Sonnenblende benötigt wird. Dies kann beispielsweise einen Innenbeleuchtung sein. Das Bedienelement 9 hingegen weist eine Funktionalität auf, die nur in der Gebrauchsstellung der Sonnenblende benötigt wird. Dies kann beispielsweise die Beleuchtung eines in die Vorderseite 2 der Sonnenblende 1 integrierten Schminkspiegels sein.

### BEZUGSZEICHENLISTE

- 1): Sonnenblende
- 2): Vorderseite
- 3): Rückseite
- 4): Deckel
- 5): Bedienelement
- 5'): Bedienelement
- 6): Bedienelement
- 6'): Bedienelement
- 7): Bedienelement
- 8): Halterung
- 9): Bedienelement
- 10): Abdeckrahmen

## Patentansprüche

1. Sonnenblende (1) mit mindestens einem von der Vorderseite (2) der Sonnenblende (1) zugänglichen ersten Bedienelement (5', 6') und mindestens einem in der Rückseite (3) der Sonnenblende (1) integriertem zweiten Bedienelement (5, 6), wobei das erste und zweite Bedienelement die gleiche Funktionalität aufweisen,
**dadurch gekennzeichnet, daß**
das erste und zweite Bedienelement (5, 6, 5', 6') einander genau gegenüberliegend angeordnet sind und auf ein gemeinsames Schaltmittel arbeiten.

2. Sonnenblende nach Anspruch 1,
**dadurch gekennzeichnet, daß**
die Bedienelemente (5, 6, 5' 6') als Druckschalter ausgebildet sind.

3. Sonnenblende nach Anspruch 1 oder 2,
**dadurch gekennzeichnet, daß**
zusätzlich auf der Vorderseite (2) und/oder der Rückseite (3) Bedienelemente (7, 9) angeordnet sind, die eine unterschiedliche Funktionalität aufweisen.

4. Sonnenblende nach Anspruch 1 bis 3,
**dadurch gekennzeichnet, daß**
in die Vorderseite (2) und/oder in die Rückseite (3) ein ein die Schaltmittel aufweisendes Schaltungsmodul abdeckender, lösbarer Deckel (4) integriert ist.

5. Sonnenblende nach Anspruch 4,
**dadurch gekennzeichnet, daß**
das Schaltungsmodul mit einer eigenen, in der Sonnenblende (1) angeordneten Spannungsversorgung ausgebildet ist.

6. Sonnenblende nach einem der vorangegangenen Ansprüche,
**dadurch gekennzeichnet, daß**
in einer Halterung (8) der Sonnenblende (1) Kontakte zur Spannungsversorgung und/oder Signalweiterleitung angeordnet sind.

## Claims

1. Sun visor (1) having at least one first control element (5', 6') which is accessible from the front side (2) of the sun visor (1), and at least one second control element (5, 6) integrated in the rear side (3) of the sun visor (1), the first and second control elements having the same functionality, **characterized in that** the first and second control elements (5, 6, 5', 6') are arranged lying exactly opposite one another and operate on a common switching means.

2. Sun visor according to Claim 1, **characterized in that** the control elements (5, 6, 5', 6') are designed as press switches.

3. Sun visor according to Claim 1 or 2, **characterized in that** control elements (7, 9) are additionally arranged on the front side (2) and/or the rear side (3) and have a different functionality.

4. Sun visor according to Claims 1 to 3, **characterized in that** a releasable cover (4) which covers a circuit module containing the switching means is integrated in the front side (2) and/or in the rear side (3).

5. Sun visor according to Claim 4, **characterized in that** the circuit module is designed with its own power supply arranged in the sun visor (1).

6. Sun visor according to one of the preceding claims, **characterized in that** contacts for the power supply and/or signal transmission are arranged in a support (8) of the sun visor (1).

## Revendications

1. Pare-soleil (1) avec au moins un premier élément de commande (5', 6') accessible depuis la face avant (2) du pare-soleil (1) et au moins un deuxième élément de commande (5, 6) intégré dans la face arrière (3) du pare-soleil (1), le premier et le deuxième éléments de commande présentant la même fonctionnalité,
**caractérisé en ce que** le premier et le deuxième éléments de commande (5, 6, 5', 6') sont disposés exactement en face l'un de l'autre et fonctionnent sur un moyen de commutation commun.

2. Pare-soleil selon la revendication 1, **caractérisé en ce que** les éléments de commande (5, 6, 5', 6') sont réalisés en tant qu'interrupteurs à pression.

3. Pare-soleil selon la revendication 1 ou 2, **caractérisé en ce que** des éléments de commande (7, 9) sont en outre disposés sur la face avant (2) et/ou la face arrière (3), lesquels présentent une fonctionnalité différente.

4. Pare-soleil selon l'une quelconque des revendications 1 à 3, **caractérisé en ce qu'**un couvercle (4) amovible recouvrant le module de commutation présentant les moyens de commutation est intégré dans la face avant (2) et/ou dans la face arrière (3).

5. Pare-soleil selon la revendication 4, **caractérisé en ce que** le module de commutation est réalisé avec une alimentation en tension propre, prévue dans le pare-soleil (1).

6. Pare-soleil selon l'une quelconque des revendications précédentes, **caractérisé en ce que** de contacts pour l'alimentation en tension et/ou pour la transmission des signaux sont prévus dans une fixation (8) du pare-soleil (1).
